# EUROPEAN PATENT SPECIFICATION

(11) **EP 3 279 588 B1**
(45) Date of publication and mention of the grant of the patent: **19.12.2018**
(21) Application number: 16771668.7
(22) Date of filing: 15.03.2016
(51) Int. Cl.: F25B 47/02, B60H 1/32, F25B 5/02, F25D 21/02, F25D 11/02

(54) **CONTROL DEVICE AND VEHICLE AIR CONDITIONER**
STEUERUNGSVORRICHTUNG UND FAHRZEUGKLIMAANLAGE
DISPOSITIF DE CONTRÔLE ET CLIMATISEUR DE VÉHICULE

(30) Priority: 30.03.2015 JP 2015069951
(43) Date of publication of application: 07.02.2018
(73) Proprietor: Denso Corporation, Kariya-city Aichi 448-8661 (JP)
(72) Inventor: TESHIMA, Kenji, Kariya-city Aichi 448-8661 (JP)
(74) Representative: Rings, Rolf
(86) International application number: PCT/JP2016/001471
(87) International publication number: WO 2016/157774

(56) References cited:
- WO-A1-2006/123718
- WO-A1-2008/094158
- JP-A- H0 626 689
- JP-A- H04 344 084
- JP-A- H10 288 427
- JP-A- S62 268 725
- JP-A- 2002 321 523
- JP-A- 2005 156 030
- JP-A- 2008 094 382
- JP-A- 2012 242 000
- JP-A- 2014 102 009
- JP-U- S5 965 375

## Description

### CROSS REFERENCE TO RELATED APPLICATION

This application is based on Japanese Patent Application No. 2015-069951 filed on March 30, 2015.

### TECHNICAL FIELD

The present invention relates to a control device and a vehicle air conditioner which are capable of detecting frosting of an evaporator of a refrigerant cycle device including multiple evaporators.

### BACKGROUND ART

For example, Patent Literature 1 is known for a technology detecting frosting (i.e. frost formation) of an evaporator. Patent Literature 1 discloses a refrigeration cycle consisting of a compressor, an interior heat exchanger, a decompressor and an exterior heat exchanger which are connected to be a circuit. A four-way switching valve in the refrigeration cycle changes a flow direction of refrigerant to switch between a heating operation and a cooling operation.

The device of Patent Literature 1 detects a pre-frosting state of the exterior heat exchanger based on a detection temperature of a temperature sensor attached to the interior heat exchanger in the heating operation in which the refrigerant flows through the interior heat exchanger, the decompressor and the exterior heat exchanger in this order. More specifically, when the detection temperature of the temperature sensor is lower than or equal to a predetermined degree, it is determined that exterior refrigerant passages including the exterior heat exchanger are in the pre-frosting state. Upon the determination of the pre-frosting state, the heating operation is switched to the cooling operation, and air blowing toward the interior heat exchanger is stopped. Accordingly, hot gas is introduced into the exterior heat exchanger, and thereby the pre-frosting state of the exterior refrigerant passages including the exterior heat exchanger can be reverted.

The Patent Literature 1 discloses a technology to detect the pre-frosting state with respect to the single evaporator. Therefore, the disclosed technology cannot be applied as it is to a refrigeration cycle device including multiple evaporators. For example, even if pre-frosting states of the multiple evaporators of the refrigeration cycle device is tried to be determined by using a detection value of a temperature sensor attached to the interior heat exchanger, it is impossible to identify which evaporator is in the pre-frosting state.

In order to identify which one of the multiple evaporators being in the pre-frosting state, one method is to detect temperatures of respective evaporators. However, in this method, temperature sensors which detect temperatures of the respective evaporators are necessary. Accordingly, the number of temperature detectors such as thermistors increases.

### PRIOR ART LITERATURE

### PATENT LITERATURE

Patent Literature 1: JP H07-239162 A

Document WO 2006/123718 A1 discloses a control device according to the preamble of claim 1.

### SUMMARY

The present invention is made in consideration of the above-described problems, and its objective is to provide a control device and a vehicle air conditioner which are capable of reducing the number of temperature detectors used for detecting frosting of multiple evaporators.

According to an aspect of the present invention, a control device detects a frosted state or a pre-frosting state of multiple evaporators of a refrigeration cycle device. The control device includes a temperature detector detecting a frosting determination temperature which is a temperature of a predetermined representative evaporator of the evaporators or a temperature related to the temperature of the representative evaporator, a temperature reducing device executing a temperature reducing control to control the temperature of the representative evaporator such that the temperature of the representative evaporator becomes lower than a temperature of another evaporator other than the representative evaporator, and a frosting determination device determining that the evaporators is in the frosted state or the pre-frosting state when the frosting determination temperature detected by the temperature detector is lower than or equal to a frosting threshold temperature in a state where the temperature of the representative evaporator is controlled to be lowest among the evaporators by the temperature reducing device.

According to this aspect, the temperature reducing device is provided and controls the temperature of the representative evaporator among the multiple evaporators to be reduced. Hence, the representative evaporator is controlled to be lowest in temperature among the plurality of evaporators. The representative evaporator can be made into a state of having the highest likelihood of being frosted. In a state where the temperature of the representative evaporator is set as described above, when the frosting determination temperature detected with respect to the representative evaporator is lower than or equal to the frosting threshold temperature, it is determined that the frosted state or the pre-frosting state is produced. Since it is determined whether the representative evaporator which is closest to the frosted state or the pre-frosting state is in the frosted state or the pre-frosting state, frosting of any one of the multiple evaporators included in the refrigeration cycle device can be predicted in advance. Therefore, by this aspect, it is possible to provide the control device capable of reducing the number of temperature detectors for detecting frosting of multiple evaporators.

According to another aspect of the present invention, a control device detects a frosted state or a pre-frosting state of multiple evaporators of a refrigeration cycle device. The control device includes a temperature detector detecting a frosting determination temperature which is a temperature of a predetermined representative evaporator of the evaporators or a temperature related to the temperature of the representative evaporator, a temperature reducing device executing a temperature reducing control to control the temperature of the representative evaporator such that the temperature of the representative evaporator becomes lower than a temperature of another evaporator other than the representative evaporator; and a temperature reduction determination device determining, based on the frosting determination temperature, whether to control the temperature of the representative evaporator to be lowest among the evaporators by the temperature reducing device.

### BRIEF DESCRIPTION OF THE DRAWINGS

FIG. 1 is a schematic diagram illustrating a refrigeration cycle device according to a first embodiment of the present invention.
FIG. 2 is a flowchart showing a process of a frosting determination control executed by a control device in the first embodiment.
FIG. 3 is a flowchart showing a process of an abnormality determination regarding a blower in the first embodiment.
FIG. 4 is a schematic diagram illustrating a refrigeration cycle device according to a second embodiment of the present invention.
FIG. 5 is a flowchart showing a process of a frosting determination control executed by a control device in a second embodiment.

### DESCRIPTION OF EMBODIMENTS

Hereinafter, multiple embodiments for implementing the present invention will be described referring to drawings. In the respective embodiments, a part that corresponds to a matter described in a preceding embodiment may be assigned the same reference numeral, and redundant explanation for the part may be omitted. When only a part of a configuration is described in an embodiment, another preceding embodiment may be applied to the other parts of the configuration. The parts may be combined even if it is not explicitly described that the parts can be combined. The embodiments may be partially combined even if it is not explicitly described that the embodiments can be combined, provided there is no harm in the combination.

### (First Embodiment)

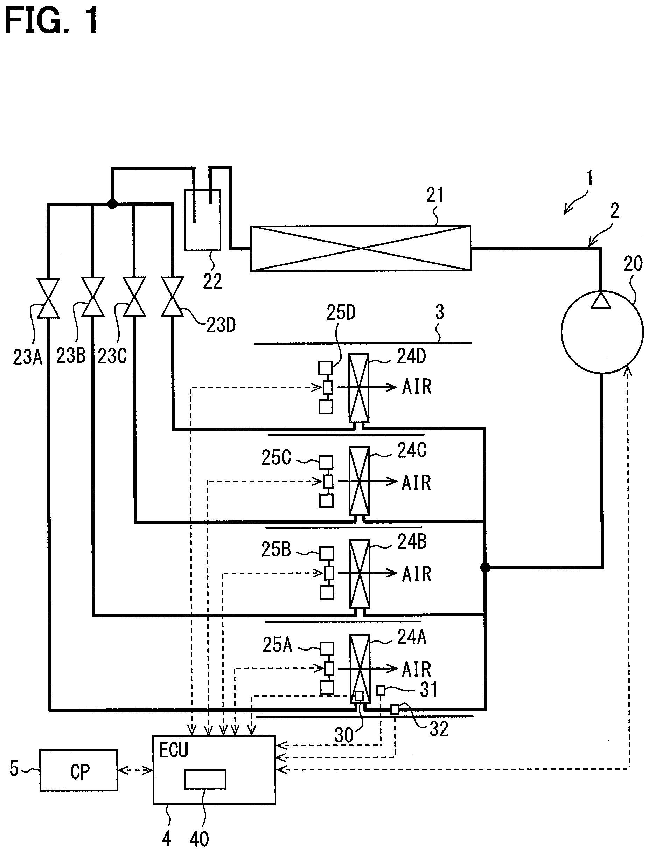

A first embodiment which is one embodiment of the present invention will be described referring to FIGS. 1 to 3. A control device 4 of the first embodiment detects a frosted state or a pre-frosting state of an evaporator with respect to a refrigeration cycle device 2 which includes multiple evaporators. The refrigeration cycle device 2 of the first embodiment is one of refrigeration cycles applied to an air conditioner, for example, but is capable of being applicable to another device used for another purpose. For example, the refrigeration cycle device 2 is applicable to a water heater and a refrigerator.

As shown in FIG. 1, the refrigeration cycle device 2 cools air blown into a vehicle compartment by the multiple evaporators utilizing change in state of refrigerant flowing in a refrigerant circuit. A vehicle air conditioner 1 includes the refrigerant cycle device 2 and is capable of performing an air-conditioning operation and a defrosting operation. The vehicle air conditioner 1 can be installed on an automobile such as a hybrid automobile, an electric automobile and a fuel-cell automobile. The defrosting operation is performed to give heat to and melt an attached frost or to prevent frost generation when a predetermined defrosting operation condition is satisfied.

The refrigerant cycle device 2 includes a compressor 20, a condenser 21, a receiver 22, multiple decompressors, and multiple evaporators. These components are connected to form a circuit via piping, thereby forming a refrigeration cycle. The multiple evaporators 24A, 24B, 24C, 24D are connected in parallel and disposed in an air passage inside an air-conditioning case 3. Hereinafter, the evaporators 24A, 24B, 24C, 24D may be written as evaporators 24A to 24D. The air passage communicates, for example, with a defroster opening part, a face opening part and a foot opening part which are provided in the air-conditioning case 3. The air passage communicates with an inside of a vehicle compartment through air-blowing ducts connected to the respective opening parts. The air-conditioning case 3 is provided, for example, behind an instrumental panel located on a front side of the vehicle compartment.

The evaporators 24A to 24D are provided in respective passages which are divided by partition walls in the air-conditioning case 3. In this configuration, airs cooled by the respective evaporators may be mixed and supplied to a predetermined area or may be individually supplied to separate areas to cool individual spaces or objects. The compressor 20, the condenser 21 and the receiver 22 are disposed in an engine compartment located frontward of and outside of the vehicle compartment.

Each of the evaporators 24A to 24D is arranged across the air passage such that the whole amount of air flowing in each air passage passes through the respective evaporators 24A to 24D. Each of the evaporators 24A to 24D functions as a cooling heat exchanger which cools air flowing in the air passage by heat absorbing action of refrigerant flowing inside the evaporator in a cooling operation. Provided downstream of the evaporators 24A to 24D in the air passages are an air mix door and a heater core which functions as a heating device. The air mix door regulates a ratio between a flow rate of air cooled by the evaporators 24A to 24D and passing through the heater core and a flow rate of air cooled by the evaporators 24A to 24D and bypassing the heater core, thereby controlling a temperature of conditioned air.

The compressor 20, for example, may be driven by an engine of the vehicle via an electromagnetic clutch or may be an electric compressor including a motor driven by electric power and a compressing mechanism driven by the motor. When the vehicle is, for example, an electric vehicle or the like which does not have an engine, an electric compressor is used as the compressor 20. The compressor 20 draws refrigerant flowing out of the evaporators, compresses the refrigerant into high-pressure and high-temperature refrigerant, and discharges the refrigerant.

The condenser 21 takes in gas-phase refrigerant discharged by the compressor 20 and condenses and liquefies the refrigerant by heat exchange with outside air blown by a fan. The receiver 22 is provided between the condenser 21 and the evaporators 24A to 24D. The receiver 22 separates the refrigerant which has passed through the condenser 21 into liquid-phase refrigerant and gas-phase refrigerant, and accumulates the liquid-phase refrigerant inside the receiver 22. The receiver 22 is a container separated from the condenser 21, but may be a container integrated with the condenser 21.

The decompressors 23A, 23B, 23C, 23D are connected in parallel. The decompressor 23A is connected to the evaporator 24A through a piping. The decompressor 23A expands the liquid-phase refrigerant flowing out of the receiver 22 into a low-temperature and low-pressure refrigerant and supplies the refrigerant to the evaporator 24A. The decompressor 23B is connected to the evaporator 24B through a piping. The decompressor 23B expands the liquid-phase refrigerant flowing out of the receiver 22 into a low-temperature and low-pressure refrigerant and supplies the refrigerant to the evaporator 24B. The decompressor 23C is connected to the evaporator 24C through a piping. The decompressor 23C expands the liquid-phase refrigerant flowing out of the receiver 22 into a low-temperature and low-pressure refrigerant and supplies the refrigerant to the evaporator 24C. The decompressor 23D is connected to the evaporator 24D through a piping. The decompressor 23D expands the liquid-phase refrigerant flowing out of the receiver 22 into a low-temperature and low-pressure refrigerant and supplies the refrigerant to the evaporator 24D.

Each of the decompressors 23A, 23B, 23C, 23D may include a fixed throttle portion having a fixed open degree of a passage through which refrigerant passes. For example, each decompressor may be constituted by a fixed expansion valve such as a fixed throttle (e.g. capillary tube) or a differential pressure expansion valve which generates a constant differential pressure between upstream and downstream of the expansion valve. Further, each of the decompressors 23A, 23B, 23C, 23D may be constituted by a thermostatic expansion valve which automatically adjusts an open degree itself so as to maintain a subcooled degree of refrigerant at a predetermined degree on an outlet of each evaporator.

A refrigerant passage extending from an outlet of the receiver 22 is branched into a first branch passage, a second branch passage, a third branch passage and a fourth branch passage which are connected to each inlet side of the decompressor 23A, the decompressor 23B, the decompressor 23C, and the decompressor 23D, respectively. The first branch passage on an outlet side of the evaporator 24A, the second branch passage on an outlet side of the evaporator 24B, the third branch passage on an outlet side of the evaporator 24C, and the fourth branch passage on an outlet side of the evaporator 24D meet together into a single passage connected to a suction portion of the compressor 20.

The evaporator 24A is provided with a blower 25A which is located upstream of the evaporator 24A in the air passage and blows air inside the vehicle compartment or air outside the vehicle compartment to a heat exchange portion. The evaporator 24B is provided with a blower 25B which is located upstream of the evaporator 24B in the air passage and blows air inside the vehicle compartment or air outside the vehicle compartment to a heat exchange portion. The evaporator 24C is provided with a blower 25C which is located upstream of the evaporator 24C in the air passage and blows air inside the vehicle compartment or air outside the vehicle compartment to a heat exchange portion. The evaporator 24D is provided with a blower 25D which is located upstream of the evaporator 24D in the air passage and blows air inside the vehicle compartment or air outside the vehicle compartment to a heat exchange portion.

Amounts of air blown by the blowers 25A, 25B, 25C, 25D are controlled by rotation speeds of their respective motors being controlled. Hereinafter, the blowers 25A, 25B, 25C, 25D may be written as blowers 25A to 25D. Each of the blowers 25A to 25D receives an alternating voltage which has been adjusted in frequency by respective inverters, and the rotation speeds of the respective motors are controlled. Each of the inverters receives supply of a direct current from an in-vehicle battery and is controlled by the control device 4. As described above, the control device 4 is capable of individually controlling the air blowing amounts of the blowers 25A to 25D.

The control device 4 is configured to be capable of detecting a current value, a voltage value and a rotation speed of each of the blowers 25A to 25D. The refrigeration cycle device 2 includes, with respect to the respective blowers 25A to 25D, a current detector which detects the current value, and a voltage detector which detects the voltage value. For example, each of the blowers 25A to 25D includes a hall element which is an electromagnetic converting element as an example of the current detector. The control device 4 detects a magnetic field caused by an input current and converts it into a voltage by utilizing the hall element. Accordingly, the control device 4 is capable of detecting the current value of each of the blowers 25A to 25D. For example, the control device 4 utilizes a noncontact alternating-current voltage sensor as an example of the voltage detector to measure a voltage applied to an electric line, and thereby is capable of detecting the voltage value of each of the blowers 25A to 25D. The control device 4 is capable of regularly detecting the rotation speed of each of the blowers based on an input signal from an element that detects electric signals of the rotation speeds of the respective blowers 25A to 25D.

The evaporator 24A is provided with an evaporator sensor 30 which detects a temperature of the evaporator 24A. The control device 4 detects a surface temperature of the evaporator 24A by receiving an input of an electric signal such as a voltage detected by the evaporator sensor 30. The evaporator sensor 30 is attached, for example, to a refrigerant tube, a fin or a tank of the evaporator 24A and detects an electric signal related to a temperature of these portions.

The evaporator 24A among the evaporators 24A to 24D is a predetermined representative evaporator. The representative evaporator is an object to be measured when a frosting determination temperature is measured. The frosting determination temperature is used for determination by the control device 4 whether the evaporators 24A to 24D are in a frosted state (i.e. frost-formed state) or whether the evaporators 24A to 24D are in a pre-frosting state (i.e. pre-frost formation state). Therefore, the temperature of the evaporator 24A detected by the evaporator sensor 30 is used as the frosting determination temperature in a frosting determination control. In this embodiment, the evaporator 24A is set as the representative evaporator. Further, an evaporator arbitrarily selected from among the evaporators 24A to 24D may be set as the representative evaporator. Accordingly, the evaporator sensor 30 is a temperature detector which detects the frosting determination temperature that is the temperature of the representative evaporator preselected from among the evaporators 24A to 24D.

The frosting determination temperature used in a determination process of the frosting determination control described below is the temperature of the representative evaporator or a temperature related to the temperature of the representative evaporator. Thus, the frosting determination temperature may be an air temperature downstream of the representative evaporator in air flow, a temperature of refrigerant flowing out of the representative evaporator, or a temperature of a refrigerant tube of the refrigerant flowing out of the representative evaporator. Therefore, the temperature detector which detects the frosting determination temperature may employ an evaporator downstream sensor 31 which detects an air temperature downstream of the evaporator 24A in air flow, and an evaporator outlet temperature sensor 32 which detects a temperature of refrigerant flowing out of the evaporator 24A or a temperature of a refrigerant tube of the refrigerant flowing out of the evaporator 24A.

The control device 4 detects a temperature related to the temperature of the evaporator 24A by receiving an input of an electric signal such as a voltage detected by the evaporator downstream sensor 31 or the evaporator outlet temperature sensor 32. In other words, a temperature detected by any temperature detector of the evaporator sensor 30, the evaporator downstream sensor 31 and the evaporator outlet temperature sensor 32 can be adopted as the frosting determination temperature in the determination process of the frosting determination control.

The control device 4 is an electronic control device which controls the air-conditioning operation in the vehicle compartment and the defrosting operation to melt a frost on the evaporators 24A to 24D. The control device 4 controls, depending on an operation state, each component constituting the refrigeration cycle device 2, for example, operation of the compressor 20, operations of the blowers 25A to 25D, operation of an inside-outside air setting door, and operation of the air mix door. The control device 4 includes a microcomputer, an input circuit, an output circuit and a frosting determination device. For example, the frosting determination device corresponds to a part of a calculation program included in the control device 4. The frosting determination device may be a determination circuit included in the microcomputer. A frosting determination circuit 40 forms the frosting determination device which determines whether the evaporators 24A to 24D are in the frosted state, the pre-frosting state or not based on the frosting determination temperature.

The input circuit receives inputs of signals from a variety of switches on an air-conditioning control panel 5 (CP) provided in a front of the vehicle compartment, an outside air temperature sensor, a refrigerant temperature sensor, a discharge pressure sensor, the evaporator downstream sensor 31 and an inside air temperature sensor. The microcomputer includes memories such as a ROM (read-only memory) and a RAM (random access memory), and a CPU (central processing unit). The microcomputer includes a variety of programs to calculate an appropriate operation state of each component which is an object to be controlled. The microcomputer performs calculation based on the variety of signals inputted into the input circuit and the variety of programs, and outputs a calculation result to the output circuit. The output circuit transmits output signals based on the calculation result to a variety of actuators, such as the inverters, the respective motors of the blowers 25A to 25D, a servomotor of the inside-outside air setting door, and a servomotor of the air mix door. The control device 4 executes an air-conditioning control to supply conditioned air which is matched with a target air blowing temperature.

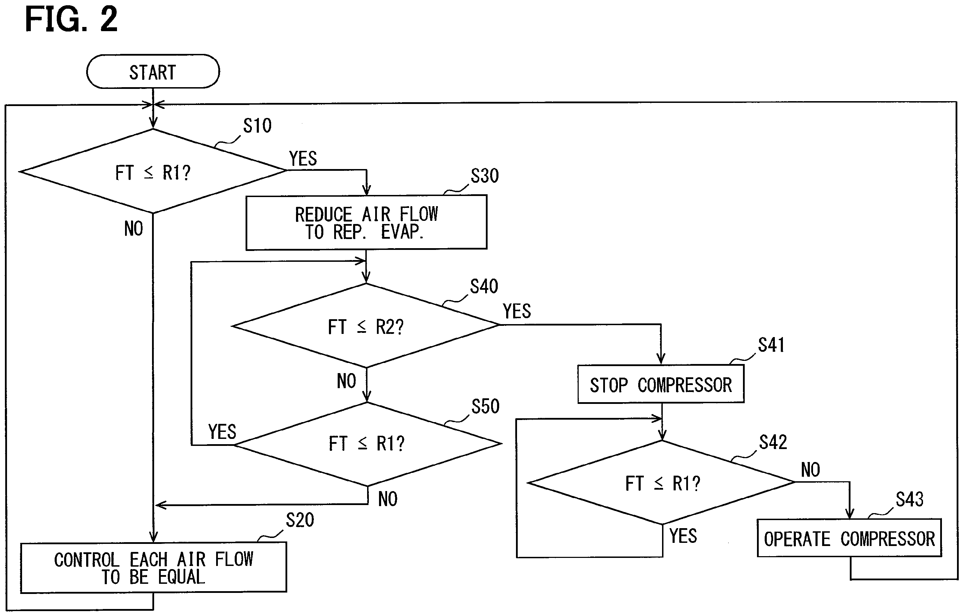

Next, the frosting determination control executed by the control device 4 will be described referring to FIG. 2. FIG. 2 is a flowchart showing a process of the frosting determination control executed by the control device 4. When an IG switch is turned on or a start switch for activation of the vehicle is turned on in an ON state of an air-conditioning operation switch, a control flow shown in FIG. 2 starts. That is, the operation of the compressor 20 starts, refrigerant circulates in the refrigeration cycle device 2, and each evaporator performs air cooling.

The frosting determination circuit 40 of the control device 4 determines at step S10 whether the temperature of the representative evaporator or the related temperature detected by the evaporator sensor 30 or the like, i.e. the frosting determination temperature (FT), is lower than or equal to a first determination value (R1). The temperature detected by the evaporator downstream evaporator 31 or the evaporator outlet temperature sensor 32 may be used as the frosting determination temperature. The first determination value is a predetermined first threshold temperature and is set to be at or higher than a temperature at which it is detectable that the representative evaporator is just before being frosted. For example, the first determination value may be set at 5 °C which is obviously higher than a temperature at which the representative evaporator is frosted. When the frosting determination circuit 40 determines that the frosting determination temperature is higher than the first determination value, the frosting determination circuit 40 determines that all of the evaporators including the representative evaporator are not in a state of frosting, and proceeds to step S20. The control device 4 controls the respective blowers 25A to 25D at step S20 such that respective air blowing amounts toward the representative evaporator and the other evaporators 24B to 24D are equal to each other.

The control of the air blowing amounts performed at step S20 is the same as a control of air blowing amounts to the respective blowers 25A to 25D in a normal air-conditioning operation. In other words, the control device 4 executes, at step S20, a process similar to that of the normal air-conditioning operation which supplies conditioned air matched with the target air blowing temperature. After the operation of step S20, the control device 4 returns to the step S10 and performs again the determination process of step S10.

When the frosting determination circuit 40 determines that the frosting determination temperature is lower than or equal to the first determination value, the operation of step S30 is performed. The control device 4 controls at step S30 an air blowing amount toward the representative evaporator, i.e. the evaporator 24A to be lower than each air blowing amount toward the other evaporators 24B to 24D. According to this process, an amount of air exchanging heat with refrigerant in the representative evaporator reduces, and thus an absorbed amount of heat from air to refrigerant reduces. As a result, the representative evaporator can be made into a state being more difficult to increase in temperature than the other evaporators. Therefore, a portion of the control device 4 which performs the process of step S30 corresponds to an example of a temperature reducing device which executes a temperature reducing control by which the temperature of the representative evaporator 24A is controlled to become lower than temperatures of the other evaporators 24B to 24D. The process of step S10 corresponds to a temperature reduction determination device which determines whether to reduce the temperature of the representative evaporator 24A to be lower than the temperatures of the other evaporators 24B to 24D.

The frosting determination circuit 40 determines at next step S40 whether the frosting determination temperature (FT) is lower than or equal to a second determination value (R2) with respect to the representative evaporator which has been controlled to be lowest in temperature among the evaporators 24A to 24D. The second determination value is a second threshold temperature (referred to also as a frosting threshold temperature) which is set to be lower than the first determination value, and is set to be a temperature at which it is detectable that the representative evaporator is just before being frosted. For example, the second determination value may be set at 2 °C slightly higher than the temperature at which the representative evaporator is frosted. The first determination value is the first threshold temperature, and the second determination value is the second threshold temperature lower than the first threshold temperature.

When the frosting determination circuit 40 determines that the frosting determination temperature is higher than the second determination value, the frosting determination circuit 40 determines that the representative evaporator is not in a state of being just before frosting, and determines at step S50 whether the frosting determination temperature (FT) is lower than or equal to the first determination value (R1). When the frosting determination temperature is determined to be higher than the first determination value at step S50, the frosting determination circuit 40 determines that all of the evaporators including the representative evaporator are not in a state of being frosted, and then performs the above-described process of step S20. When the frosting determination temperature is determined to be lower than or equal to the first determination value at step S50, the frosting determination circuit 40 returns to step S40 and determines whether the frosting determination temperature of the representative evaporator is lower than or equal to the second determination value.

When the frosting determination circuit 40 determines at step S40 that the frosting determination temperature of the representative evaporator is lower than or equal to the second determination value, the frosting determination circuit 40 determines that the representative evaporator is in the state of being just before being frosted or the frosted state, and the control device 4 stops the operation of the compressor 20 at step S41. This process is the defrosting operation to all of the evaporators, and circulation of refrigerant in the refrigeration cycle device 2 stops. Hence, the temperature of each evaporator increases. The processes from the step S40 to step S41 constitutes a frosting determination device which determines that all of the evaporators are in the pre-frosting state or the frosted state, and corresponds to the process executing the defrosting operation. Further, an air-conditioning control to equalize cooling performances of all of the evaporators included in the refrigeration cycle device 2 can be performed, except for the process of reduction in an air blowing amount toward the representative evaporator for the frosting detection at step S30.

When the defrosting operation of step S41 starts, flow of refrigerant stops. Thus, the temperatures of all evaporators 24A to 24D increase. At next step S42, while the defrosting operation of step S41 continues, the frosting determination circuit 40 determines whether the frosting determination temperature (FT) of the representative evaporator is lower than or equal to the first determination value (R1) similar to the precedent step S10 and step S50. The step S42 is repeated until the frosting determination temperature of the representative evaporator becomes higher than the first determination value. When the frosting determination circuit 40 determines at step S42 that the frosting determination temperature of the representative evaporator becomes higher than the first determination value, the control device 4 starts the operation of the compressor 20 at step S43, and returns to step S10 and executes the above-described successive processes. The restart of the operation of the compressor 20 at step S43 is due to a determination that there is no concern about frosting of any of the evaporators 24A to 24D because it is found out that there is no concern about frosting of the representative evaporator which has been controlled to be lowest in temperature. A portion of the control device 4 performing the processes of step S20, step S42, step S43 and step S50 corresponds to a temperature reduction termination device that terminates the temperature reducing control when the frosting determination temperature becomes higher than the first threshold temperature (R1) during the above-described temperature reducing control.

As above, in the air-conditioning control of the vehicle compartment, the control device 4 executes the process to reduce the temperature of the representative evaporator when a first temperature condition is satisfied. Further, the control device 4 determines that the frosted state is produced when the representative evaporator which has been lowered in temperature satisfies the second temperature condition.

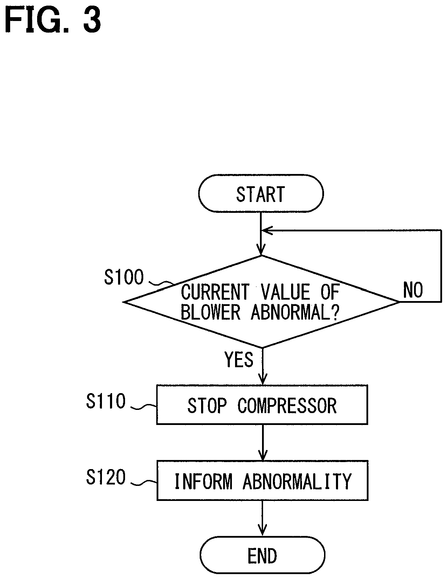

Next, an abnormality presence-or-absence determination with respect to the blower, executed by the control device 4, will be described with reference to FIG. 3. FIG. 3 is a flowchart showing a process of the abnormality presence-or-absence determination with respect to the blowers 25A to 25D, which is executed by the control device 4. This flowchart starts when the flowchart of the above-described frosting determination control starts. In other words, while the air-conditioning control is being performed, the process of the abnormality presence-or-absence determination with respect to the blowers 25A to 25D is also performed. The process of the abnormality presence-or-absence determination shown in FIG. 3 is terminated when the air-conditioning operation is stopped.

The control device 4 determines at step S100 whether any one of the current value, the voltage value and the rotation speed is abnormal with respect to each of the blowers 25A to 25D. The step S100 is repeatedly performed until such detection value is determined to be abnormal. A state of the detection value being abnormal is, for example, where the rotation speed of the blower is different from a controlling value, where the current value or the voltage value differs from a normal value, or where a signal is unobtainable.

When the control device 4 determines that the detection value is abnormal, the control device 4 determines that the blower has a malfunction, and performs a process to stop the operation of the compressor 20 at step S110. The stop of the blower substantially reduces a heat absorption amount from air to refrigerant in the evaporator to which air is not supplied from the blower. Accordingly, the evaporator becomes lower in temperature than other evaporators to which air is normally supplied, and thus the evaporator becomes likely to be frosted. Therefore, the process of the abnormal presence-or-absence determination of the blower shown in FIG. 3, which is a process separate from the frosting determination control shown in FIG. 2, enables detection of a frosted state caused by malfunction of the blower before it happens.

The control device 4 executes at step S120 a process to inform a user of the abnormal state by displaying it on the air-conditioning panel 5 or generating a warning sound or voice, and then terminates the flowchart.

Actions and effects provided by the first embodiment will be described. The control device 4 detects the frosted state or the pre-frosting date of the evaporator in the refrigeration cycle device 2 including the multiple evaporators 24A to 24D. The control device 4 includes the temperature detector which detects the frosting determination temperature, and the frosting determination temperature is the temperature of the representative evaporator (e.g. evaporator 24A) among the multiple evaporators 24A to 24D or the temperature related to the temperature of the representative evaporator. The control device 4 includes the temperature reducing device which controls the temperature of the representative evaporator such that the temperature of the representative evaporator becomes lower than the temperatures of the other evaporators other than the representative evaporator. The control device 4 includes the frosting determination device, and the frosting determination device determines the multiple evaporators are in the frosted state or the pre-frosting state when the frosting determination temperature is lower than or equal to the frosting threshold temperature in a state where the temperature of the representative evaporator is controlled to be the lowest temperature by the temperature reducing device.

According to this control, the temperature reducing device is provided to control the temperature of the representative evaporator to decrease, and accordingly the representative evaporator is controlled to be lowest in temperature among all the evaporators 24A to 24D. Hence, the representative evaporator can be made into a state of having the highest likelihood of being frosted. Thus, in the state where the temperature of the representative evaporator is set to be lowest, the frosting determination device determines that the frosted state or the pre-frosting state is produced when the detected frosting determination temperature regarding the representative evaporator is lower than or equal to the frosting threshold temperature. Accordingly, the determination whether the frosted state or the pre-frosting state is produced is performed with respect to the representative evaporator which is closest to the frosted state. Therefore, frosting of any one of the evaporators included in the refrigeration cycle device 2 is predictable before it happens. As a result, when frosting of the multiple evaporators included in the refrigeration cycle device 2 is detected, the number of the temperature detectors for detection can be reduced. Accordingly, a cost of temperature detectors for detecting a frosted state can be reduced.

The temperature reducing device controls the temperature of the representative evaporator to be lower than the temperatures of the other evaporators other than the representative evaporator when the detected frosting determination temperature is lower than or equal to the first threshold temperature (step S10, step S30).

The frosting determination device determines whether the detected frosting determination temperature is lower than or equal to the second threshold temperature which is lower than the first threshold temperature in a state where the temperature of the representative evaporator is controlled to be lowest among the multiple evaporators by the temperature reducing device (step S40). When the frosting determination temperature is lower than or equal to the second threshold temperature which is lower than the first threshold temperature, the frosting determination device determines that the multiple evaporators are in the frosted state or the pre-frosting state.

According to this control, the two-stage threshold temperatures are used with respect to the frosting determination temperature regarding the representative evaporator. Thus, the two-stage determinations: the determination process for producing a state of being likely to be frosted; and the process for determining whether the frosted state or the pre-frosted state is produced, can be facilitated. When the control device 4 includes at least the temperature detector which detects the frosting determination temperature regarding the representative evaporator, it is possible to provide the control device 4 which is inexpensive and capable of detecting the frosted state with respect to all of the evaporators included in the refrigeration cycle device 2.

The temperature reducing device reduces an air blowing amount supplied to the representative evaporator to be less than air blowing amounts supplied to the other evaporators other than the representative evaporator (step S30). Such process to reduce the air blowing amount toward the representative evaporator to be less than the others enables a control of the temperature of the representative evaporator to be lower than the temperatures of the other evaporators other than the representative evaporator, and thereby generates via a simple control a condition where the frosted state can be detected with respect to all evaporators.

The vehicle air conditioner 1 includes the control device 4, the refrigeration cycle device 2 having the multiple evaporators 24A to 24D which are connected in parallel as heat exchangers that cools air blown into the vehicle compartment, and the temperature detector which detects the frosting determination temperature regarding the predetermined representative evaporator. In the vehicle air conditioner 1, the representative evaporator among all of the evaporators 24A to 24D included in the refrigeration cycle device 2 is controlled to be in the state of being lowest in temperature, thereby being in the state of having the highest likelihood of being frosted. In such state where the temperature of the representative evaporator is set to be lowest, the frosting determination device determines that the frosted state or the pre-frosting state is produced when the frosting determination temperature regarding the representative evaporator is lower than or equal to the frosting threshold temperature. The determination whether the frosted state or the pre-frosting state is produced is performed with respect to the representative evaporator which is closest to the frosted state. Hence, the vehicle air conditioner 1 capable of predicting frosting of any one of the evaporators of the refrigeration cycle device 2 can be provided. As a result, the number of temperature detectors for detecting frost can be reduced, and thus the vehicle air conditioner 1 capable of reducing a cost of the temperature detectors can be provided.

### (Second Embodiment)

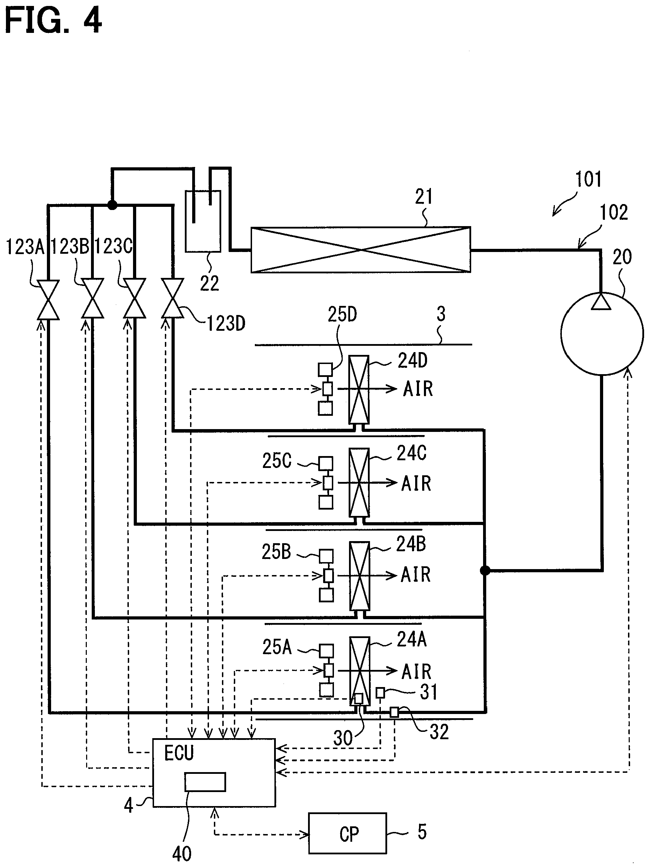

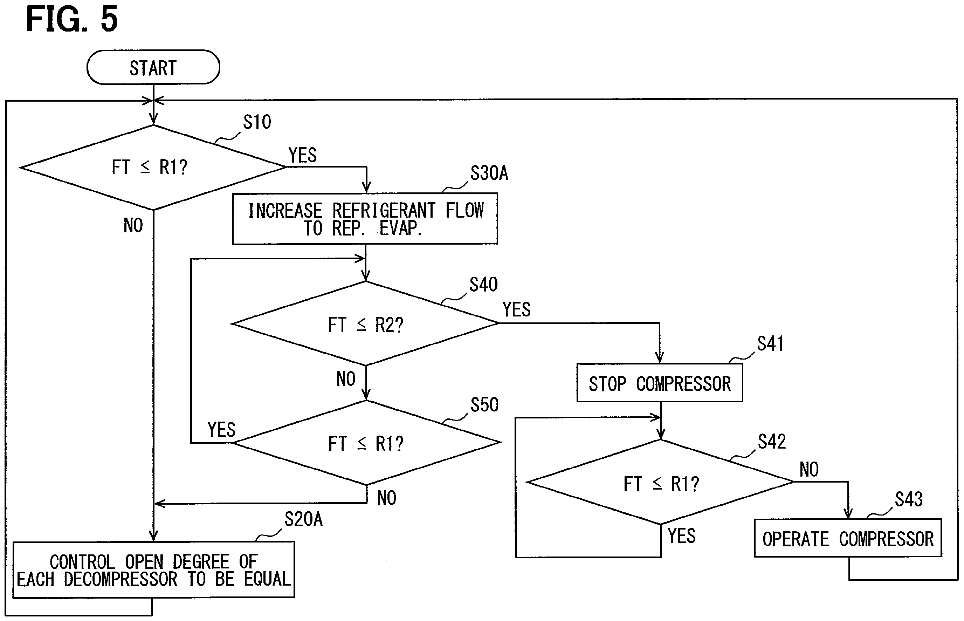

A second embodiment will be described with reference to FIGS. 4 and 5. In the second embodiment, components and processing steps assigned the same numerals as the drawings of the first embodiment and non-explained configurations are similar to those of the first embodiment and exert similar actions and effects. In the second embodiment, only portions different from the first embodiment will be described.

As shown in FIG. 4, a refrigeration cycle device 102 of a vehicle air conditioner 101 includes multiple decompressors 123A, 123B, 123C, 123D which are connected to each other in parallel. Hereinafter, the decompressors 123A, 123B, 123C, 123D may be written as decompressors 123A to 123D. The decompressors 123A to 123D correspond to the decompressors 23A, 23B, 23C, 23D of the first embodiment, respectively, but the decompressors 123A to 123D are open-degree adjustable expansion valves which are configured such that their open degrees are controllable by the control device 4, which is different from the first embodiment. Therefore, the control device 4 is capable of individually controlling the open degrees of the respective decompressors, and thereby capable of controlling amounts of refrigerants flowing toward respective evaporators.

Next, a frosting determination control of the second embodiment will be described with reference to FIG. 5. Hereinafter, only different matters from the first embodiment will be described.

As shown in FIG. 5, when a frosting determination circuit 40 determines at step S10 that a frosting determination temperature (FT) is higher than a first determination value (R1), all evaporators including a representative evaporator are determined not to be a state of being frosted, and a process at step S20A is executed. The control device 4 controls, at step S20A, the open degrees of the respective decompressors 123A to 123D to be equivalent such that the amounts of refrigerants flowing toward the representative evaporator and the other evaporators 24B to 24D become the same value.

The refrigerant-flow amount control executed at step S20A is the same as a control of amounts of refrigerants flowing toward the respective decompressors 123A to 123D in a normal air-conditioning operation. In other words, the control device 4 executes, at step S20A, a process similar to the normal air-conditioning operation in which conditioned air matched with a target air blowing temperature is supplied. Subsequent to the execution of the process at step S20A, the control device 4 returns to step S10 and repeats the determination process at step S10.

When the frosting determination circuit 40 determines that the frosting determination temperature is lower than or equal to the first determination value, a process at step S30A is executed. The control device 4 controls, at step S30A, an amount of refrigerant flowing toward the representative evaporator, i.e. an evaporator 24A, to be larger than an amount of each refrigerant flowing toward the other evaporators 24B to 24D. In other words, the open degree of the decompressor 123A that adjusts a pressure of refrigerant supplied to the representative evaporator 24A is set to be larger than the open degrees of the decompressors 123B to 123D that adjust pressures of refrigerants supplied to the other evaporators 24B to 24D. According to this process, the amount of refrigerant flowing through the representative evaporator increases. Thus, the representative evaporator can be made to be more difficult to increase in temperature than the other evaporators. According to this process, the representative evaporator is lower in temperature than the other evaporators and is likely to be frosted. A portion of the control device 4 that executes the process of step S30A corresponds to an example of the above-described temperature reducing device that executes the temperature reducing control to control the temperature of the representative evaporator such that the temperature of the representative evaporator is controlled to be lower than the temperatures of the other evaporators 24B to 24D. A portion of the control device 4 that executes the process of step S20A corresponds to an example of the above-described temperature reduction termination device.

As described above, in the frosting determination control of the second embodiment, the amount of refrigerant flowing through the representative evaporator is controlled to be larger than the amount of refrigerant flowing through the other evaporators, and thereby the representative evaporator becomes in a state of having the highest likelihood of being frosted.

Actions and effects provided by the second embodiment will be described below. The temperature reducing device makes the amount of refrigerant supplied to the representative evaporator to be larger than the amounts of refrigerant supplied to the other evaporators other than the representative evaporator (step S30A). This execution of the process to increase the amount of refrigerant flowing to the representative evaporator enables a control of the temperature of the representative evaporator to be lower than the temperatures of the other evaporators other than the representative evaporator. Therefore, a condition where frosting states of all evaporators are detectable can be produced via a simple open-degree control.

The temperature reducing device controls the open degree of the decompressor 23A that adjusts a pressure of refrigerant supplied to the representative evaporator, and the open degree of the decompressor 23A is controlled to be larger than the open degrees of the decompressors 23B to 23D which are individually provided to adjust pressures of refrigerants supplied to the other evaporators. The execution of the process to make the open degree of the decompressor connected to the representative evaporator be larger than the others enables a control of the amount of refrigerant flow to the representative evaporator to be larger than the refrigerant flows to the other evaporators, thereby being capable of producing a condition where the frosted state of all of the evaporators is detectable via a simple open-degree control.

As described above, preferable embodiments of the present invention are described, but the present invention is not limited to the above-described embodiment and may be modified variously and implemented. The structures of the above-described embodiments are just examples, and the technical scope of the present invention is not limited to these described ranges.

A refrigeration cycle device applicable to the disclosed control device or the vehicle air conditioner is not limited to the refrigeration cycle devices 2, 102 having the configurations described in the above-described embodiments. It is only necessary for the applicable refrigeration cycle device to include multiple evaporators and form a closed circuit in which refrigerant circulates. Hence, air-conditioning functional components provided in the circuit and their positions are not limited to those of the above-described refrigeration cycle devices 2, 102.

The multiple evaporators included in the disclosed refrigeration cycle device is not limited to its number (four) described above. It is only necessary for the number of the multiple evaporators to be more than two.

In the above-described embodiments, when the compressor 20 consists of an electric compressor, a rotation speed of motor of the compressor 20 is controlled by an inputted alternating-current voltage which has been adjusted in frequency by an inverter. The inverter receives a supply of direct-current power from an in-vehicle battery and is controlled by the control device 4.

It is only necessary for the compressor 20 to be driven by use of electric power of a storage battery. For example, the compressor 20 may include a capacity control valve as a capacity control mechanism which changes a discharge capacity, and may change its capacity by a driving signal transmitted to the capacity control valve. In this case, the capacity control valve is an electromagnetically-actuated valve, and for example, is an on-off valve capable of repeatedly opening and closing a supply passage of refrigerant by a duty cycle control. For example, the capacity control valve is controlled in valve open time by receiving a supply of a duty signal current consisting of two values: ON and OFF, as a capacity control signal from the control device 4. The capacity control signal from the control device 4 operates the capacity control valve and changes a control pressure Pc in a casing of the compressor 20. When the control pressure PC changes, a stroke length of a piston or the like changes, thereby changing a capacity of the compressor.

The duty signal is a current signal having a pulse wave shape which repeats ON and OFF at short time intervals. ON and OFF of the signal corresponds to an open state and a closed state of the capacity control valve, respectively. The capacity of the compressor 20 decreases at the time of the open state of the capacity control valve while the capacity of the compressor 20 increases at the time of the closed state of the capacity control valve. That is, when the capacity needs to be reduced, a signal for lengthening the valve open time is transmitted, and the control pressure PC is increased. When the capacity needs to be increased, a signal for shortening the valve open time is transmitted, and the control pressure PC is decreased. Such change in duty cycle of a pulse signal enables a free control of the capacity of the compressor 20 to be changed continuously.

While the present invention has been described with reference to embodiments thereof, it is to be understood that the invention is not limited to the embodiments and constructions. To the contrary, the present invention is intended to cover various modification and equivalent arrangements. In addition, while the various elements are shown in various combinations and configurations, which are exemplary, other combinations and configurations, including more, less or only a single element, are also within the scope of the appended claims.

## Claims

1. A control device detecting a frosted state or a pre-frosting state of a plurality of evaporators (24A, 24B, 24C, 24D) of a refrigeration cycle device (2, 102), the control device comprising:
a temperature detector (30, 31, 32) detecting a frosting determination temperature which is a temperature of a predetermined representative evaporator (24A) of the plurality of evaporators or a temperature related to the temperature of the representative evaporator, **characterized in that** it comprises:
a temperature reducing device (S30, S30A) executing a temperature reducing control to control the temperature of the representative evaporator such that the temperature of the representative evaporator becomes lower than a temperature of another evaporator other than the representative evaporator; and
a frosting determination device (40, S40, S41) determining that the plurality of evaporators is in the frosted state or the pre-frosting state when the frosting determination temperature detected by the temperature detector is lower than or equal to a frosting threshold temperature in a state where the temperature of the representative evaporator is controlled to be lowest among the plurality of evaporators by the temperature reducing device.

2. The control device according to claim 1, wherein
the temperature reducing device executes the temperature reducing control when the frosting determination temperature is lower than or equal to a first threshold temperature, and
the frosting determination device determines that the plurality of evaporators is in the frosted state or the pre-frosting state when the frosting determination temperature is lower than or equal to a second threshold temperature lower than the first threshold temperature in the state where the temperature of the representative evaporator is controlled to be lowest among the plurality of evaporators by the temperature reducing device.

3. The control device according to claim 1 or 2, wherein
the temperature reducing device reduces an amount of blown air supplied to the representative evaporator to be lower than an amount of blown air supplied to the other evaporator for execution of the temperature reducing control.

4. The control device according to claim 1 or 2, wherein
the temperature reducing device reduces an amount of refrigerant flow supplied to the representative evaporator to be lower than an amount of refrigerant flow supplied to the other evaporator for execution of the temperature reducing control.

5. The control device according to claim 4, wherein
the temperature reducing device controls an open degree of a decompression device (123A) which adjusts a pressure of refrigerant supplied to the representative evaporator, such that the open degree of the decompression device becomes larger than an open degree of a decompression device (123B, 123C, 123D) which is individually provided to adjust a pressure of refrigerant supplied to each of the other evaporator, in order to increase the amount of refrigerant flow supplied to the representative evaporator to be larger than the amount of refrigerant flow supplied to the other evaporator.

6. A vehicle air conditioner comprising:
the control device (4) according to any one of claims 1 to 5;
a refrigeration cycle device (2) including a plurality of evaporators (24A, 24B, 24C, 24D) as heat exchangers which cool air blown to a vehicle compartment, the plurality of evaporators being connected to each other in parallel

7. The control device according to claim 1, wherein
the temperature reducing device executes the temperature reducing control when the frosting determination temperature is lower than a first threshold temperature,
the temperature reducing device terminates the temperature reducing control when the frosting determination temperature is higher than the first threshold temperature, and
the frosting determination device performs a defrosting operation when the frosting determination temperature is lower than or equal to a second threshold temperature lower than the first threshold temperature in the state where the temperature of the representative evaporator is controlled to be lowest among the plurality of evaporators by the temperature reducing device.

8. The control device according to claim 2, wherein
the temperature reducing device does not execute the temperature reducing control when the frosting determination temperature is higher than the first threshold temperature.

9. The control device according to claim 2, further comprising
a temperature reduction termination device (S20, S20A, S42, S43, S50) which terminates the temperature reducing control when the frosting determination temperature is higher than the first threshold temperature.

10. The control device according to any one of claims 1 to 9, further comprising
a temperature reduction determination device (S10) determining, based on the frosting determination temperature, whether to control the temperature of the representative evaporator to be lowest among the plurality of evaporators by the temperature reducing device.

## Patentansprüche

1. Steuervorrichtung, die einen vereisten Zustand oder einen Vorvereisungszustand einer Mehrzahl von Verdampfern (24A, 24B, 24C, 24D) einer Kältekreislaufvorrichtung (2, 102) erfasst, wobei die Steuervorrichtung umfasst:
einen Temperaturdetektor (30, 31, 32), der eine Vereisungsbestimmungs-temperatur erfasst, die eine Temperatur eines vorbestimmten repräsentativen Verdampfers (24A) der mehreren Verdampfer ist, oder eine Temperatur, die sich auf die Temperatur des repräsentativen Verdampfers bezieht; **dadurch gekennzeichnet, dass** sie umfasst
eine Temperaturverringerungsvorrichtung (S30, S30A), die eine Temperaturverringerungssteuerung ausführt, um die Temperatur des repräsentativen Verdampfers derart zu steuern, dass die Temperatur des repräsentativen Verdampfers niedriger wird als eine Temperatur eines anderen Verdampfers mit Ausnahme des repräsentativen Verdampfers; und
eine Vereisungsbestimmungsvorrichtung (40, S40, S41), die bestimmt, dass sich die Vielzahl von Verdampfern im vereisten Zustand oder im Vorvereisungszustand befindet, wenn die von dem Temperaturdetektor erfasste Vereisungsbestimmungs-temperatur niedriger oder gleich einer Vereisungsschwellentemperatur in einem Zustand ist, in dem die Temperatur des repräsentativen Verdampfers durch die Temperaturverringerungsvorrichtung so gesteuert wird, dass sie unter der Vielzahl von Verdampfern am niedrigsten ist.

2. Steuervorrichtung nach Anspruch 1, wobei
die Temperaturverringerungsvorrichtung die Temperaturverringerungssteuerung ausführt, wenn die Vereisungsbestimmungs-Temperatur niedriger als oder gleich einer ersten Schwellentemperatur ist, und
die Vereisungsbestimmungsvorrichtung bestimmt, dass sich die Vielzahl von Verdampfern im vereisten Zustand oder im Vorvereisungszustand befindet, wenn die Vereisungsbestimmungstemperatur niedriger oder gleich einer zweiten Schwellentemperatur ist, die niedriger ist als die erste Schwellentemperatur in dem Zustand, in dem die Temperatur des repräsentativen Verdampfers durch die Temperaturverringerungsvorrichtung so gesteuert wird, dass sie unter der Vielzahl von Verdampfern am niedrigsten ist.

3. Steuervorrichtung nach Anspruch 1 oder 2, wobei
die Temperaturverringerungsvorrichtung die Menge an Blasluft, die dem repräsentativen Verdampfer zugeführt wird, auf weniger als eine Menge an Blasluft reduziert, die dem anderen Verdampfer zur Ausführung der Temperaturreduzierungssteuerung zugeführt wird.

4. Steuervorrichtung nach Anspruch 1 oder 2, wobei
die Temperaturverringerungsvorrichtung eine Menge an Kältemittelstrom, die dem repräsentativen Verdampfer zugeführt wird, auf einen Wert reduziert, der niedriger ist als eine Menge an Kältemittelstrom, der dem anderen Verdampfer zur Ausführung der Temperaturverringerungssteuerung zugeführt wird.

5. Steuervorrichtung nach Anspruch 4, wobei
die Temperaturverringerungsvorrichtung einen Öffnungsgrad einer Dekompressionsvorrichtung (123A) steuert, der einen Druck des dem repräsentativen Verdampfer zugeführten Kältemittels derart einstellt, dass der Öffnungsgrad der Dekompressionsvorrichtung größer wird als ein Öffnungsgrad einer Dekompressionsvorrichtung (123B, 123C, 123D), die individuell vorgesehen ist, um einen Druck des Kältemittels einzustellen, das jedem der anderen Verdampfer zugeführt wird, um die Menge des Kältemittelstroms, die dem repräsentativen Verdampfer zugeführt wird, zu erhöhen, um größer zu sein als die Menge des Kältemittelstroms, die dem anderen Verdampfer zugeführt wird.

6. Fahrzeugklimaanlage, umfassend:
die Steuervorrichtung (4) nach einem der Ansprüche 1 bis 5;
eine Kühlkreisvorrichtung (2) mit mehreren Verdampfern (24A, 24B, 24C, 24D) als Wärmetauscher, die in einen Fahrzeugraum geblasene Luft kühlen, wobei die mehreren Verdampfer parallel miteinander verbunden sind;

7. Steuervorrichtung nach Anspruch 1, wobei
die Temperaturverringerungsvorrichtung die Temperaturverringerungssteuerung ausführt, wenn die Vereisungsbestimmungstemperatur niedriger als eine erste Schwellentemperatur ist,
die Temperaturverringerungsvorrichtung die Temperaturverringerungssteuerung beendet, wenn die Vereisungsbestimmungstemperatur höher als die erste Schwellentemperatur ist, und
die Vereisungsbestimmungsvorrichtung einen Abtauvorgang durchführt, wenn die Vereisungsbestimmungstemperatur niedriger oder gleich einer zweiten Schwellentemperatur ist, die niedriger als die erste Schwellentemperatur ist, in dem Zustand, in dem die Temperatur des repräsentativen Verdampfers durch die Temperaturverringerungsvorrichtung so gesteuert wird, dass sie unter der Vielzahl von Verdampfern am niedrigsten ist.

8. Steuervorrichtung nach Anspruch 2, wobei
die Temperaturverringerungsvorrichtung die Temperaturverringerungssteuerung nicht ausführt, wenn die Vereisungsbestimmungstemperatur höher als die erste Schwellentemperatur ist.

9. Steuervorrichtung nach Anspruch 2, ferner umfassend
eine Temperaturverringerungsbeendigungsvorrichtung (S20, S20A, S42, S43, S50), die die Temperaturverringerungssteuerung beendet, wenn die Vereisungsbestimmungstemperatur höher als die erste Schwellentemperatur ist.

10. Steuervorrichtung nach einem der Ansprüche 1 bis 9, ferner umfassend
eine Temperaturverringerungsbestimmungsvorrichtung (S10), die auf der Basis der Vereisungsbestimmungstemperatur bestimmt, ob die Temperatur des repräsentativen Verdampfers durch die Temperaturverringerungsvorrichtung so gesteuert werden soll, dass sie unter der Vielzahl von Verdampfern am niedrigsten ist.

## Revendications

1. Dispositif de commande détectant un état givré ou un état de pré-givrage d'une pluralité d'évaporateurs (24A, 24B, 24C, 24D) d'un dispositif à cycle de réfrigération (2, 102), le dispositif de commande comprenant :
un détecteur de température (30, 31, 32) détectant une température de détermination de givrage qui est une température d'un évaporateur représentatif (24A) prédéterminé de la pluralité d'évaporateurs ou une température liée à la température de l'évaporateur représentatif, **caractérisé en ce qu'**il comprend :
un dispositif de réduction de température (S30, S30A) exécutant une commande de réduction de température pour commander la température de l'évaporateur représentatif de sorte que la température de l'évaporateur représentatif devienne inférieure à une température d'un autre évaporateur autre que l'évaporateur représentatif ; et
un dispositif de détermination de givrage (40, S40, S41) déterminant que la pluralité d'évaporateurs sont dans l'état givré ou dans l'état de pré-givrage lorsque la température de détermination de givrage détectée par le détecteur de température est inférieure ou égale à une température de seuil de givrage dans un état dans lequel la température de l'évaporateur représentatif est commandée pour être la plus faible parmi la pluralité d'évaporateurs par le dispositif de réduction de température.

2. Dispositif de commande selon la revendication 1, dans lequel
le dispositif de réduction de température exécute la commande de réduction de température lorsque la température de détermination de givrage est inférieure ou égale à une première température de seuil, et
le dispositif de détermination de givrage détermine que la pluralité d'évaporateurs sont dans l'état givré ou dans l'état de pré-givrage lorsque la température de détermination de givrage est inférieure ou égale à une deuxième température de seuil inférieure à la première température de seuil dans l'état dans lequel la température de l'évaporateur représentatif est commandée pour être la plus faible parmi la pluralité d'évaporateurs par le dispositif de réduction de température.

3. Dispositif de commande selon la revendication 1 ou 2, dans lequel
le dispositif de réduction de température réduit une quantité d'air soufflé fournie à l'évaporateur représentatif pour qu'elle soit inférieure à une quantité d'air soufflé fournie à l'autre évaporateur pour l'exécution de la commande de réduction de température.

4. Dispositif de commande selon la revendication 1 ou 2, dans lequel
le dispositif de réduction de température réduit une quantité d'écoulement de fluide frigorigène fournie à l'évaporateur représentatif pour qu'elle soit inférieure à une quantité d'écoulement de fluide frigorigène fournie à l'autre évaporateur pour l'exécution de la commande de réduction de température.

5. Dispositif de commande selon la revendication 4, dans lequel
le dispositif de réduction de température commande un degré d'ouverture d'un dispositif de détente (123A) qui ajuste une pression du fluide frigorigène fourni à l'évaporateur représentatif, de sorte que le degré d'ouverture du dispositif de détente devienne supérieur à un degré d'ouverture d'un dispositif de détente (123B, 123C, 123D) qui est prévu individuellement pour ajuster une pression du fluide frigorigène fourni à chacun des autres évaporateurs, afin d'augmenter la quantité d'écoulement de fluide frigorigène fournie à l'évaporateur représentatif pour qu'elle soit supérieure à la quantité d'écoulement de fluide frigorigène fournie à l'autre évaporateur.

6. Climatiseur de véhicule comprenant :
le dispositif de commande (4) selon l'une quelconque des revendications 1 à 5 ;
un dispositif à cycle de réfrigération (2) comprenant une pluralité d'évaporateurs (24A, 24B, 24C, 24D) en tant qu'échangeurs de chaleur qui refroidissent l'air soufflé dans un habitacle de véhicule, la pluralité d'évaporateurs étant connectés les uns aux autres en parallèle.

7. Dispositif de commande selon la revendication 1, dans lequel
le dispositif de réduction de température exécute la commande de réduction de température lorsque la température de détermination de givrage est inférieure à une première température de seuil,
le dispositif de réduction de température met fin à la commande de réduction de température lorsque la température de détermination de givrage est supérieure à la première température de seuil, et
le dispositif de détermination de givrage effectue une opération de dégivrage lorsque la température de détermination de givrage est inférieure ou égale à une deuxième température de seuil inférieure à la première température de seuil dans l'état dans lequel la température de l'évaporateur représentatif est commandée pour être la plus faible parmi la pluralité d'évaporateurs par le dispositif de réduction de température.

8. Dispositif de commande selon la revendication 2, dans lequel
le dispositif de réduction de température n'exécute pas la commande de réduction de température lorsque la température de détermination de givrage est supérieure à la première température de seuil.

9. Dispositif de commande selon la revendication 2, comprenant en outre
un dispositif de terminaison de réduction de température (S20, S20A, S42, S43, S50) qui met fin à la commande de réduction de température lorsque la température de détermination de givrage est supérieure à la première température de seuil.

10. Dispositif de commande selon l'une quelconque des revendications 1 à 9, comprenant en outre
un dispositif de détermination de réduction de température (S10) déterminant, sur la base de la température de détermination de givrage, s'il convient de commander la température de l'évaporateur représentatif pour qu'elle soit la plus faible parmi la pluralité d'évaporateurs par le dispositif de réduction de température.
